(19) Europäisches Patentamt
European Patent Office
Office européen des brevets

(11) **EP 1 596 495 B1**

(12) **EUROPÄISCHE PATENTSCHRIFT**

(45) Veröffentlichungstag und Bekanntmachung des Hinweises auf die Patenterteilung:
**27.04.2011 Patentblatt 2011/17**

(51) Int Cl.:
*H02P 9/14* (2006.01)    *H02P 9/18* (2006.01)

(21) Anmeldenummer: **05009961.3**

(22) Anmeldetag: **06.05.2005**

(54) **Verfahren zum sensorlosen Betrieb eines elektronisch kommutierten Motors, und Motor zur Durchführung eines solchen Verfahrens**

Method for sensorless operation of an electronically commutated motor, and motor for carrying out such a method

Procédé d'operation d'un moteur à commutation électronique sans capteur, et un moteur de mise en oeuvre de ce procédé

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **12.05.2004 DE 102004024639**
**14.02.2005 DE 102005007905**

(43) Veröffentlichungstag der Anmeldung:
**16.11.2005 Patentblatt 2005/46**

(73) Patentinhaber: **ebm-papst St. Georgen GmbH & Co. KG**
**78112 St. Georgen (DE)**

(72) Erfinder: **Dornhof, Konstantin**
**78194 Immendingen (DE)**

(74) Vertreter: **Raible, Tobias et al**
**Raible & Raible**
**Schoderstrasse 10**
**70192 Stuttgart (DE)**

(56) Entgegenhaltungen:
• **PATENT ABSTRACTS OF JAPAN Bd. 010, Nr. 309 (E-447), 21. Oktober 1986 (1986-10-21) -& JP 61 121790 A (SONY CORP), 9. Juni 1986 (1986-06-09)**
• **PATENT ABSTRACTS OF JAPAN Bd. 017, Nr. 038 (M-1358), 25. Januar 1993 (1993-01-25) -& JP 04 257770 A (TOYOTA MOTOR CORP), 11. September 1992 (1992-09-11)**

**Beschreibung**

Die Erfindung betrifft ein Verfahren zum sensorlosen Betrieb eines elektronisch kommutierten Motors, und einen Motor zur Durchführung eines solchen Verfahrens. Ein solcher Motor kann eine einzige Phase, auch Strang genannt, haben, oder bevorzugt eine Mehrzahl von Strängen.

Eine bevorzugte Anwendung der Erfindung ist die bei "zweiphasigen" Motoren. Hierzu folgende Erläuterung: Da man in der Technik stets nach griffigen Abkürzungen sucht und die Differenzierung nach "zweipulsig" und "zweisträngig" für den normalen Geschäftsverkehr zu kompliziert ist, verwendet man für solche Motoren meist den Gattungsbegriff "zweiphasige Motoren", gleichgültig, ob ein solcher Motor eine oder zwei Phasen hat.

Da z.B. ein zweipulsiger Motor pro Rotorumdrehung von 360° el. in seinem Stator zwei Statorstromimpulse erhält (die u.U. sehr kurz sein können, z.B. nur 10° el., und die auch durch eine Pulsweitenmodulation in noch kürzere Impulse unterteilt sein können), entsteht bei Motoren dieser Bauart zwischen den beiden Statorstromimpulsen eine Lücke des elektromagnetisch erzeugten Drehmoments, und diese Lücke wird durch ein Hilfsmoment beliebiger Art überbrückt. Das kann ein mechanisch erzeugtes Hilfsmoment sein, aber in der überwiegenden Zahl der Fälle ist es ein so genanntes Reluktanzmoment, das durch die Wechselwirkung eines permanentmagnetischen Rotors mit den Eisenmassen des Stators entsteht.

Zu diesem Zweck müssen die Eisenmassen des Stators an dessen Umfang ungleichmäßig verteilt sein, wofür es eine unendliche Zahl von Möglichkeiten gibt. Wenn nun der permanentmagnetische Rotor eines solchen - stromlosen - Motors mit gleichförmiger Geschwindigkeit angetrieben wird, induziert er in der Statorwicklung eine Wechselspannung, d.h. der Motor arbeitet dann als Wechselstromgenerator. Die induzierte Wechselspannung weicht hierbei von der Sinusform ab, und ihre Form hängt zusätzlich von der Drehrichtung ab. Diese Faktoren müssen bei der Auslegung solcher Motoren berücksichtigt werden.

Die JP 61-12790 A zeigt einen Motor mit einem Stator und einem Rotor. Der Stator hat zwei Stränge, und der Rotor hat einen magnetischen Nordpol N, einen magnetischen Südpol S und einen nichtmagnetischen Bereich Z. Aus der induzierten Spannung an den beiden Strängen, deren Form durch die drei Rotorbereiche N, S und Z beeinflusst wird, werden sowohl die Drehrichtung als auch die Kommutierungszeitpunkte bestimmt.

Aus der DE 198 20 929 A1 kennt man einen an einem Wechselstromnetz betriebenen Synchronmotor mit einem zweipoligen permanentmagnetischen Rotor. Der Motor hat eine Hauptwicklung und eine Hilfswicklung, die unter einem Winkel von 90° zueinander angeordnet sind. Diese Wicklungen sind auf vier Statorpolen eines Statorkerns angeordnet, wobei der Rotor - zufallsbedingt - im Ruhezustand verschiedene Ruhestellungen einnehmen kann, von denen nicht alle für einen Anlauf geeignet sind.

Vor dem Start wird deshalb der Rotor zunächst durch Erregen der Hauptwicklung mit Spannungsimpulsen gleicher Polarität in eine Zwischenstellung gedreht (falls er sich nicht bereits in dieser Zwischenstellung befindet.) Nach einer kurzen Pause werden dann weitere Spannungsimpulse gleicher Polarität an die Hilfswicklung gelegt, wobei die Hauptwicklung stromlos bleibt. Dadurch dreht sich der Rotor in eine gewünschte Startposition.

Erst jetzt kann der Motor in einer gewünschten Drehrichtung gestartet werden. Dazu werden Netzhalbwellen einer gewünschten Polarität an die Hauptwicklung gelegt. Zur Erzeugung eines zusätzlichen Drehmoments kann auch noch ein Spannungsimpuls an die Hilfswicklung gelegt werden.

Sobald der Motor läuft, werden die Spannungen gemessen, die vom permanentmagnetischen Rotor in der jeweils stromlosen Wicklung induziert werden, und die Drehzahl wird bis zur gewünschten Drehzahl erhöht. Bei dieser wird die Hilfswicklung abgeschaltet.

Wenn die Drehzahl zu hoch wird, wird die Stromzufuhr zu den Wicklungen unterbrochen. Wird die Drehzahl zu niedrig, so wird zusätzlich die Hilfswicklung aktiviert, um durch erhöhte Energiezufuhr ein Beschleunigungsmoment zu erhalten.

Es ist eine Aufgabe der Erfindung, einen neuen elektronisch kommutierten Motor bereit zu stellen.

Nach der Erfindung wird diese Aufgabe gelöst durch den Gegenstand des Patentanspruchs 1. Man erhält so direkt aus dem Verlauf der im Motor induzierten Spannungen einen Wert für die augenblickliche Drehrichtung des Motors und kann diesen, falls er falsch herum läuft, anhalten und neu starten.

Eine besonders vorteilhafte Weiterbildung der Erfindung ist Gegenstand des Anspruchs 4. Dies ermöglicht es, den Einfluss von Störspannungen weitgehend zu eliminieren. Dies ist deshalb wichtig, weil eine übliche analoge Filterschaltung zu Phasenverschiebungen führen würde, was eine zuverlässige Erfassung der Drehrichtung unmöglich machen würde.

Eine andere Lösung der gestellten Aufgabe ist Gegenstand des Anspruchs 5. Dies ermöglicht eine einfache Erzeugung von Steuersignalen zur Steuerung der Ströme in der Statorwicklung eines solchen Motors. Es hat sich gezeigt, dass es hierfür besonders günstig ist, die in mindestens einer Phase induzierte Spannung zu differenzieren und mit diesem differenzierten Signal die Kommutierung des Motors zu steuern. Dies ergibt eine sehr zuverlässige Kommutierung auch dann, wenn zwischen einem solchen Motor und seiner Elektronik ein räumlicher Abstand liegt. Dies kann dann der Fall sein, wenn der Motor in einer sehr heißen oder sehr aggressiven Umgebung arbeiten muss, und man deshalb die Elektronik des Motors räumlich getrennt von ihm anordnen muss.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den Unteransprüchen. Es zeigt:

Fig. 1 eine bevorzugte Schaltung für einen elektronisch kommutierten Motor niedriger Leistung, hier einen zweiphasigen Motor,

Fig. 2 eine Prinzipdarstellung zur Erläuterung von Fig. 1,

Fig. 3 ein Diagramm zur Erläuterung von Fig. 1 und 2 für eine von beiden Drehrichtungen,

Fig. 4 ein Diagramm analog Fig. 3 für die entgegengesetzte Drehrichtung,

Fig. 5 ein Diagramm zur Erläuterung des Einflusses von Störspannungen,

Fig. 6 ein Diagramm zur Erläuterung der Verhältnisse für den Fall, dass der Betriebsspannung UB keine Störsignale überlagert sind,

Fig. 7 ein Diagramm analog Fig. 6, wobei aber der Betriebsspannung UB ein Störsignal N überlagert ist,

Fig. 8 ein Flussdiagramm einer erfindungsgemäßen Routine zum Eliminieren von Störsignalen, um die Erfassung der Drehrichtung sicherer zu machen,

Fig. 9 ein Blockdiagramm zur Erläuterung der so genannten Zündwinkelverschiebung,

Fig. 10 einen Auszug aus Fig. 1 zur Erläuterung der Zündwinkelverschiebung, wobei nur ein Differenzierglied dargestellt ist,

Fig. 11 ein Diagramm mit Spannungsverläufen zur Erläuterung der Fig. 10, 12 und 13,

Fig. 12 ein Schaltbild analog Fig. 10, aber mit zwei Differenziergliedern,

Fig. 13 ein Schaltbild analog Fig. 12, wobei aber die Auswertung der differenzierten Signale mittels zweier Komparatoren erfolgt, und

Fig. 14 ein Schaltbild, welches die Verwendung der Erfindung bei einem dreiphasigen Motor zeigt,

Fig. 15 eine vereinfachte Version der Schaltung gemäß Fig. 14,

Fig. 16 eine Darstellung der Spannungen an den drei Strängen des Motors 20' der Fig. 15,

Fig. 17 eine Darstellung der Spannungen gemäß Fig. 16 nach ihrer Differenzierung, und

Fig. 18 eine Darstellung der Signale an den Ausgängen der Komparatoren 190 bzw. 188 bzw. 186, welche zur Steuerung der Ströme in den drei Strängen des Motors der Fig. 15 dienen.

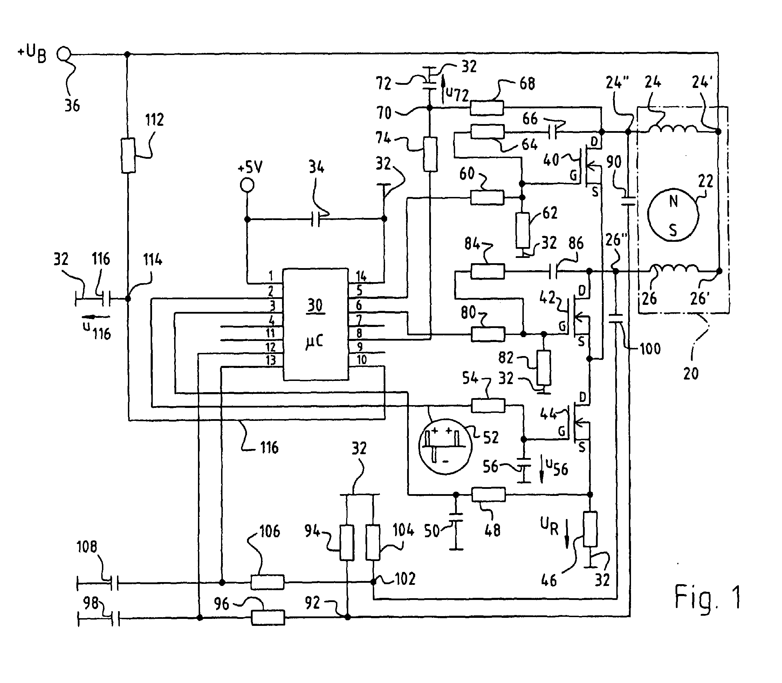

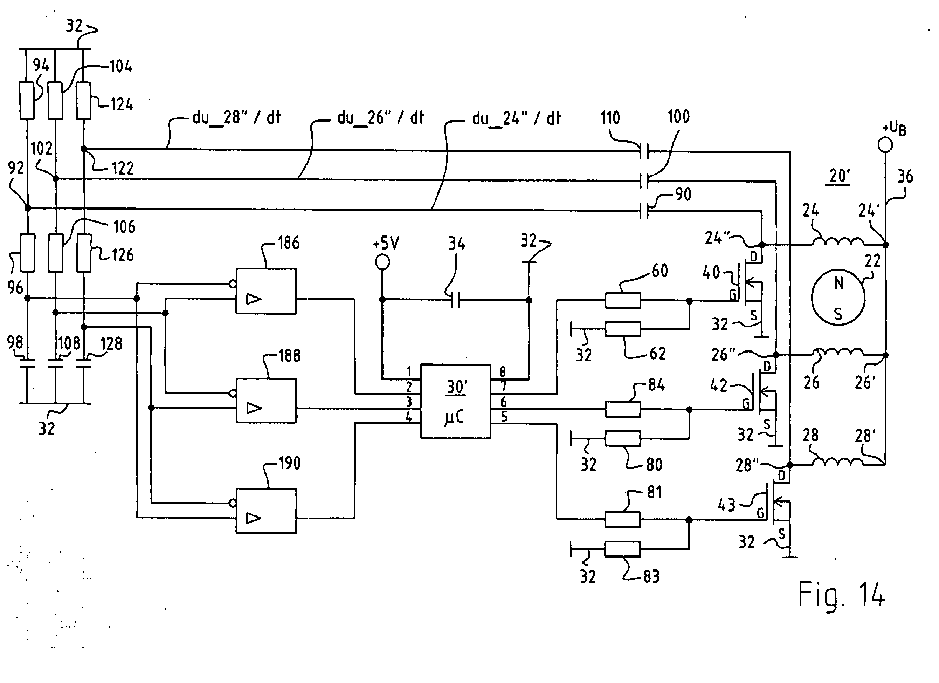

**Fig. 1** zeigt eine Schaltung zum Betreiben eines sog. zweipulsigen elektronisch kommutierten Motors 20, der einen permanentmagnetischen Rotor 22 und eine Statorwicklung hat, die hier mit zwei Phasen 24, 26 dargestellt ist, welche gewöhnlich über das Eisen des (nicht dargestellten) Statorblechpakets magnetisch miteinander gekoppelt sind. Ein solcher Motor wird deshalb zweipulsig genannt, weil in der Statorwicklung 24, 26 pro Rotordrehung von 360° el. zwei Statorstromimpulse fließen. Die Statorwicklung kann in manchen Fällen auch nur eine Phase haben, und dann fließt in dieser während einer Drehung von 180° el. ein Stromimpuls in der einen Richtung, und während der anschließenden Drehung von 180° el. ein Stromimpuls in der entgegengesetzten Richtung. Für diese Motoren, die in riesigen Stückzahlen hergestellt werden, gibt es viele Bauarten. Ein typisches Beispiel ist in der DE 2346380 C2 dargestellt. Solche Motoren werden häufig als so genannte Klauenpolmotoren ausgebildet, wobei dann die Klauenpole so ausgebildet sind, dass sie ein von der Drehstellung abhängiges Reluktanzmoment erzeugen. Nachfolgend ist in Fig. 14 ein dreipulsiger Motor dargestellt, bei dem pro Rotordrehung von 360° el. drei Statorstromimpulse fließen.

Die meisten Motoren dieser Art verwenden zur Erfassung der Rotorstellung einen Hallsensor. Wenn es aber nötig wird, solche Motoren bei hohen Temperaturen zu betreiben, oder wenn die Elemente für die Steuerung des Motors örtlich von diesem getrennt sein müssen, muss die Rotorstellung nach dem so genannten Sensorless-Prinzip erfasst werden, also ohne Hallsensor. Fig. 1 betrifft eine solche Schaltung. Der Rotor 22 ist zweipolig dargestellt, könnte aber auch andere Polzahlen haben. Bei einem zweipoligen Rotor entspricht eine volle Umdrehung einer Drehung um 360° el., d. h. in diesem Fall gilt:

$$360° \text{ mech.} = 360° \text{ el.} \qquad \qquad ...(1)$$

Bei einem vierpoligen Rotor gilt:

$$360° \text{ mech.} = 720° \text{ el.}$$

Diese Zusammenhänge sind dem Fachmann des Elektromaschinenbaus geläufig.

Der Motor 20 wird gesteuert von einem Mikrocontroller ($\mu$C) 30, dessen Anschlüsse mit 1 bis 14 bezeichnet sind. Diese beziehen sich auf einen $\mu$C vom Typ PIC16F676. Der Anschluss 1 liegt an einer geregelten Spannung von +5 V, der Anschluss 14 an Masse 32. Dazwischen liegt ein Kondensator 34.

Der Motor 20 wird von einer Betriebsspannung $U_B$ mit Strom versorgt. Der positive Anschluss ist mit 36 bezeichnet, und an ihm sind die einen Anschlüsse 24', 26' der Phasen 24, 26 angeschlossen. Zwischen dem Anschluss 36 und Masse 32 liegt z. B. UB = 13 V, also die Spannung einer (nicht dargestellten) Fahrzeugbatterie.

Zur Steuerung des Stromes in der Phase 24 dient ein n-Kanal-MOSFET 40, zur Steuerung der Phase 26 ein n-Kanal-MOSFET 42. Dazu ist der Anschluss 24" der Phase 24 an den Drain-Anschluss D des Transistors 40 angeschlossen, und der Anschluss 26" der Phase 26 an den Anschluss D des Transistors 42. Die Source-Anschlüsse S beider Transistoren sind miteinander und mit dem Drain D eines n-Kanal-MOSFET 44 verbunden, der dazu dient, in den Phasen 24, 26 einen konstanten Gesamtstrom zu erzeugen. Die Source S des Transistors 44 ist über einen zur Strommessung dienenden Widerstand 46 mit Masse 32 verbunden. Die Spannung $u_R$ am Widerstand 46 wird über ein RC-Siebglied 48, 50 dem Eingang 3 des $\mu$C 30 zugeführt. Entsprechend der Höhe von $u_R$ liefert der $\mu$C an seinem Ausgang 2 ein Steuersignal 52, z.B. ein PWM-Signal. Preiswerte $\mu$C haben jedoch meist keine Hardware-PWM-Steuerung, und man müsste deshalb ein PWM-Signal durch ein Programm generieren, also durch Software. Das würde die Ressourcen eines solchen preiswerten $\mu$C weitgehend absorbieren und den $\mu$C dadurch blockieren.

Deshalb wird in der Praxis der Kondensator 56 nur einmal über den Widerstand 54 auf eine Spannung $u_{56}$ aufgeladen, die den Arbeitspunkt des Transistors 44 so steuert, dass sich der gewünschte Konstantstrom im Motor 20 ergibt, und dieser Konstantstrom ist folglich durch das Programm des $\mu$C 30 einstellbar.

Nach dieser Anfangsladung wird der Ausgang 2 des $\mu$C 30 in seinen hochohmigen Zustand umgeschaltet. Wenn sich jetzt der Kondensator 56 entlädt, ändert sich die Spannung $u_R$ am Messwiderstand 32. In diesem Fall wird die Spannung $u_{56}$ am Kondensator 56 nur "aufgefrischt", also etwas erhöht oder etwas reduziert.

Eine Erhöhung erfolgt in der Weise, dass während eines Prozessortakts (z.B. während 1 $\mu$s) der Ausgang 2 auf "HIGH" gelegt wird, um über den Widerstand 54 die Ladung des Kondensators 56 etwas zu erhöhen, oder indem während eines Prozessortakts der Ausgang 2 auf "LOW" gelegt wird, um - über den Widerstand 54 - die Ladung des Kondensators 56 etwas zu reduzieren. Zum oder vom Kondensator fließen also nur kleine Ströme, und das hat den Vorteil, dass der $\mu$C 30 nicht durch hohe Ströme beschädigt werden kann.

Die Transistoren 40, 42 werden durch den Steuertransistor 44 im Source-Bereich jeweils derart angesteuert, dass der Strom durch die Phasen 24, 26 zumindest während der Kommutierung im Wesentlichen konstant ist. Hierzu werden die Transistoren 40, 42 als sog. Abschnürstromquellen betrieben. Wird z. B. der Transistor 40 leitend gesteuert, so wirkt der Steuertransistor 44 als Widerstand gegen Masse 32. Die Höhe des Stroms durch die Phasen 24, 26 und damit die Drehzahl des Motors 20 lässt sich also durch die Spannung $u_{56}$ bequem einstellen und verändern.

Durch den Steuertransistor 44 wird erreicht, dass bei den Transistoren 40 bzw. 42 die Drain-Source-Spannung UDS geändert wird, und damit wird auch die Höhe des Stroms durch die Phasen 24 bzw. 26 beeinflusst. Hierbei wird ggf. auch erreicht, dass die Transistoren 40, 42 im Abschnürbereich arbeiten. Alle Typen von Feldeffekttransistoren weisen einen solchen Abschnürbereich auf.

Wird der Steuertransistor 44 derart angesteuert, dass er einen hohen Widerstand und damit eine niedrige Leitfähigkeit aufweist, so steigt das Potential an der Source S des jeweils leitenden Endstufentransistors 40, 42. Dadurch fließt weniger Strom durch diesen Transistor, und er geht in den Abschnürbereich über.

Wird der Steuertransistor 48 derart angesteuert, dass er einen geringen Widerstand und damit eine hohe Leitfähigkeit hat, so ist das an der Source S des jeweils leitenden Transistors 40 oder 42 anliegende Potential gering.

Die damit verbundene hohe Gate-Source-Spannung führt zu einer entsprechend hohen Stromstärke in den Phasen 24, 26.

Im Gegensatz zu einer üblichen Kommutierung wird so der Strom im Motor 20 im Wesentlichen konstant gehalten, wodurch sich ein sehr ruhiger Lauf des Motors 20 ergibt.

Der Transistor 40 wird vom Ausgang 5 des µC 30 gesteuert, der Transistor 42 vom Ausgang 6. Hierzu ist der Ausgang 5 über einen Widerstand 60 mit dem Gate G des Transistors 40 verbunden, das über einen Widerstand 62 mit Masse 32 und über die Serienschaltung eines Widerstands 64 und eines Kondensators 66 mit dem Drain D verbunden ist. Letzterer ist über einen Widerstand 68 mit einem Knotenpunkt 70 verbunden, der über einen Kondensator 72 mit Masse 32 und über einen Widerstand 74 mit dem Anschluss 8 des µC 30 verbunden ist (Die Anschlüsse 4, 7, 9 und 11 des µC 30 sind nicht beschaltet).

Am Kondensator 72 tritt im Betrieb eine Spannung u72 auf, die zur Bestimmung der Drehrichtung des Rotors 22 verwendet wird. Dies wird nachfolgend beschrieben.

Der Ausgang 6 ist über einen Widerstand 80 mit dem Gate G des Transistors 42 verbunden, der über einen Widerstand 82 mit Masse 32 und über die Serienschaltung eines Widerstands 84 und eines Kondensators 86 mit dem Drain D verbunden ist.

Der Anschluss 24" ist über einen Kondensator 90 mit einem Knotenpunkt 92 verbunden, der über einen Widerstand 94 mit Masse 32 und über einen Widerstand 96 mit dem Eingang 12 des µC 30 verbunden ist, an den auch ein Siebkondensator 98 angeschlossen ist.

Der Anschluss 26" ist über einen Kondensator 100 mit einem Knotenpunkt 102 verbunden, der über einen Widerstand 104 mit Masse 32 und über einen Widerstand 106 mit dem Eingang 13 des µC 30 verbunden ist, an den auch ein Siebkondensator 108 angeschlossen ist.

Die Elemente 90 bis 108 dienen dazu, den Zeitpunkt zu steuern, an dem während einer Rotordrehung der Strom von der Phase 24 zur Phase 26 wechselt, oder umgekehrt. Mit zunehmender Drehzahl kann der Zeitpunkt der Kommutierung vom einen Strang zum anderen in Richtung früh oder spät verschoben werden, was man gewöhnlich, in Anlehnung an die Terminologie eines Benzinmotors, als "Zündwinkelverschiebung" bezeichnet, obwohl naturgemäß bei einem Elektromotor 20 nichts gezündet wird.

Mit dem Anschluss 36 ist über einen Widerstand 112 ein Knotenpunkt 114 verbunden, der über einen Kondensator 116 mit Masse 32 verbunden ist. Am Kondensator 116 tritt im Betrieb eine Spannung u_116 auf, die abhängig von der Spannung am Anschluss 36 ist, und diese Spannung wird über eine Leitung 118 dem Eingang 10 des µC 30 zugeführt und dient dazu, Störspannungen rechnerisch zu eliminieren, die in der Spannung u72 enthalten sind. Dies wird nachfolgend beschrieben.

**Bevorzugte Werte der Bauelemente in Fig. 1** (für UB = 13 V):

| | |
|---|---|
| Transistoren 40, 42, 44 | ILRL3410 |
| C72, 116 | 2 nF |
| C50, 66, 86, 98, 108 | 1 nF |
| C34, 56 | 100 nF |
| R62, 68, 82, 94, 96, 104, 106, 112 | 100 kohm |
| R48, 54, 60, 80 | 10 kOhm |
| R74 | 0 Ohm |
| R46 | 1,5 kOhm |
| R64, R84 | 1 kOhm |

**Ermittlung der Drehrichtung**

Zur Ermittlung der Drehrichtung erfasst und analysiert man die Spannung, die im Betrieb in einer nicht bestromten Phase des Motors 20 durch den Permanentmagnetrotor 22 induziert wird, oder man erfasst den Spannungsabfall, der an einem Transistor auftritt, durch welchen der Strom zu der bestromten Phase fließt. Dies ist deshalb möglich, weil diese Spannungen je nach Drehrichtung bei einem Motor des eingangs genannten Typs unterschiedliche Formen haben. Hieraus lassen sich die gewünschten Informationen über die Drehrichtung des Motors relativ zum Reluktanzmoment entnehmen.

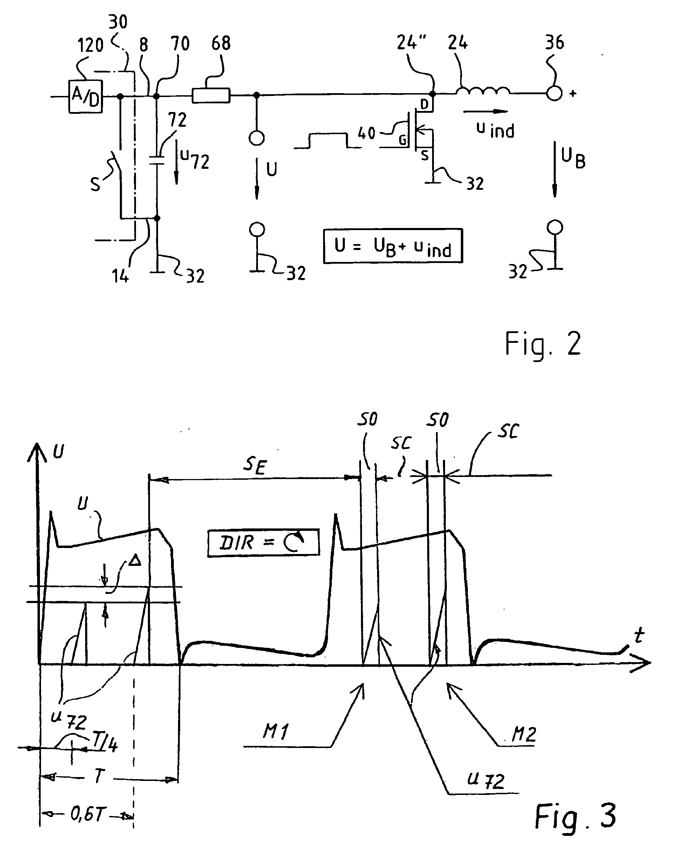

**Fig. 2** zeigt einen Auszug aus Fig. 1, nämlich die wesentlichen Elemente der Messschaltung für die Erfassung der Drehrichtung.

Das Potential am Punkt 24" der Phase 24 wird gemessen, wenn der Transistor 40 nicht leitend ist, also wenn der Transistor 42 Strom führt. In diesem Fall liegt am Punkt 36 die Betriebsspannung UB, und zu dieser addiert sich die induzierte Spannung $u_{ind}$ an der stromlosen Phase 24, so dass für das Potential U am Punkt 24" gilt:

$$U = U_B + u_{ind} \qquad \qquad ...(2)$$

Dieses Potential wird über den Widerstand 68 dem Kondensator 72 zugeführt.

Parallel zum Kondensator 72 liegt ein Schalter S im µC 30 und dieser Schalter S ist die meiste Zeit geschlossen, symbolisiert durch "SC" (= switch closed), und hält dabei den Kondensator 72 entladen, so dass die Spannung u72 während dieser Zeit den Wert 0 hat.

Wenn eine Messung M durchgeführt werden soll, wird der Schalter S durch das Programm des µC 30 geöffnet, so dass die Spannung u72 am Kondensator 72 auf einen Wert ansteigt, der etwa der augenblicklichen Spannung U entspricht. Diese Spannung am Kondensator 72 wird in einem A/D-Wandler 120 in einen digitalen Wert konvertiert und zwischengespeichert.

Bezeichnet man den Abstand zwischen zwei Kommutierungen mit Tp, so geschieht das einmal nach Tp/4 und zu diesem Zeitpunkt wird eine erste Messung M1 ausgeführt, und ein erster Wert u_72.1 wird gespeichert.

Anschließend wird nach einer vorgegebenen Zeitdauer, z. B. nach 0,5...0,6 Tp eine zweiter Messung M2 durchgeführt, und der dort gemessene zweite Wert u_72.2 wird ebenfalls gespeichert.

Danach wird die Differenz Δ gebildet, also

$$\Delta = u\_72.1 - u\_72.2 \qquad \qquad ..(3)$$

und das Vorzeichen der Differenz Δ wird bestimmt.

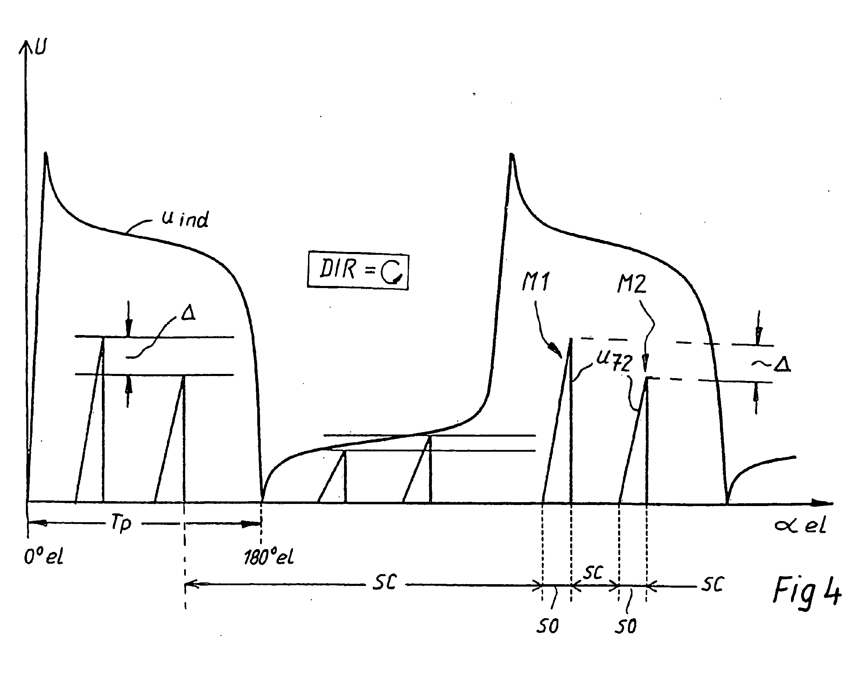

Bei **Fig. 3** ergibt sich ein negatives Vorzeichen der Differenz A, und bei Fig. 4 ergibt sich ein positives Vorzeichen, weil bei der Drehrichtung gemäß Fig. 4 die Spannung U eine fallende Charakteristik hat, während sie bei Fig. 3 eine steigende Charakteristik hat. Dies ist eine Eigenschaft solcher zweipulsiger Motoren, die im vorliegenden Fall für die Erfassung der Drehrichtung ausgenutzt wird.

Hierbei ist sehr vorteilhaft, dass durch den Steuertransistor 44 der Strom im Widerstand 46 konstant gehalten wird, d. h die im Augenblick stromführende Phase 26 hat keinen wesentlichen Einfluss auf die Spannung $u_{ind}$ an der Phase 24, an der die Messungen stattfinden, weil der konstante Strom in der Phase 26 keine transformatorische Kopplung auf die Phase 24 bewirkt.

Die Praxis hat gezeigt, dass mit der Methode nach den Fig. 2 bis 4 nur dann zuverlässige Ergebnisse bei der Bestimmung der Drehrichtung erzielt werden können, wenn die Spannung $U_B$ weitgehend konstant ist, also keine Störspannungen N enthält. Diese Voraussetzung ist jedoch in der Praxis oft nicht gegeben, z. B. in einem Kraftfahrzeug, und deshalb hat es sich im Rahmen der Erfindung als sehr vorteilhaft erwiesen, eine Störspannungskompensation durchzuführen.

Dies geschieht dadurch, dass in Fig. 1 zusätzlich die Spannung $u_{116}$ am Kondensator 116 gemessen und bei der Bestimmung der Drehrichtung zusätzlich berücksichtigt wird. Die Spannung $u_{116}$ wird dem Eingang 10 des µC 30 zugeführt, und dieser Eingang 10 enthält ebenso wie der in Fig. 2 dargestellte Eingang 8 einen durch das Programm steuerbaren Schalter S und einen A/D-Wandler, um auch die Spannung $u_{116}$ digitalisieren und zwischenspeichern zu können.

Um bei einem Gleichstrommotor in einer störungsreichen Umgebung einzelne Parameter besser überwachen zu können, müssen Messgröße und Störung N simultan erfasst werden. Hierfür benötigt man zwei identische Messeinrichtungen, welche synchron und in gleichem Format die Messgröße und die Störung registrieren können. Bei Motorsteuerungen für preiswerte Motoren, wo nur ein µC vorgesehen ist, ist eine solche simultane Messung aus technischen Gründen ausgeschlossen.

Nach der Erfindung ersetzt man deshalb die an sich benötigte simultane Messung durch eine quasi-simultane Messung. Dann gilt für eine saubere Signalmessung folgende Grundformel:

$$\text{Signal} = (\text{Signal} + \text{Störung N}) - \text{Störung N} \qquad \qquad ...(4)$$

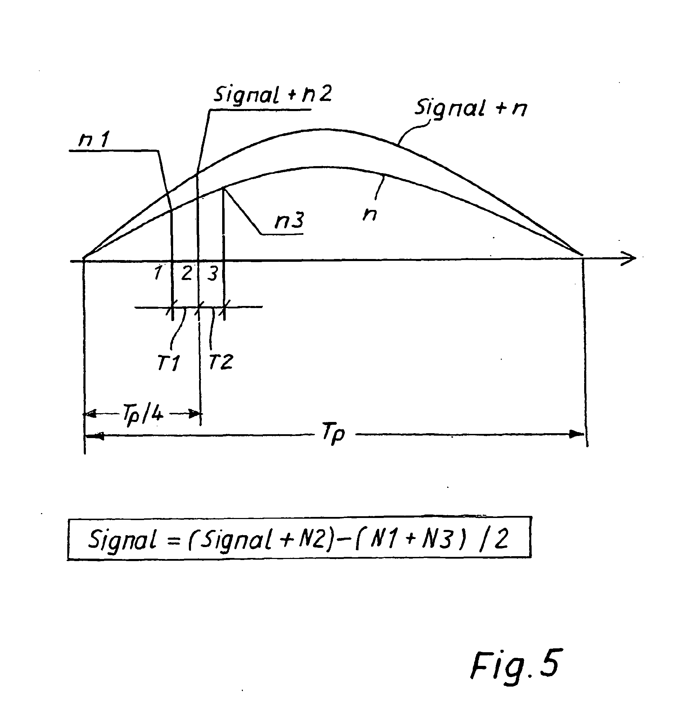

Zu diesem Zweck muss man beide Komponenten unabhängig voneinander und zeitlich versetzt messen. Dies zeigt **Fig. 5** an einem Beispiel. Die Störkomponente N wird dort in einem vorgegebenen Abstand T1 vor der sog. Mischmessung gemessen, ebenso in einem zeitlichen Abstand T2 nach dieser Mischmessung, und aus den beiden gemessenen Störkomponenten berechnet man den Mittelwert und zieht ihn von dem Mischsignal ab. Eine solche quasi-simultane Überwachung funktioniert dann zuverlässig, wenn die Frequenz der Störkomponente wesentlich niedriger als 1/T1 ist. Je kleiner der zeitliche Abstand T1 ist, umso höhere Störfrequenzen können bei dieser quasi-simultanen Messmethode kompensiert werden.

Fig. 5 zeigt als untere Kurve eine Störkomponente N, und als obere Kurve eine sog. Mischkomponente, nämlich das zu messende Signal plus die Störkomponente N.

Zu einem Zeitpunkt 1 misst man die Störkomponente N1 an dieser Stelle. Zu einem Zeitpunkt 2 misst man das Mischsignal, also Signal plus N2. Und zu einem Zeitpunkt 3 misst man die Störkomponente N3. Wie man ohne weiteres erkennt, kann man dann mit der in Fig. 5 angegebenen Formel die Störkomponente herausrechnen und erhält ein wesentlich verbessertes Signal und dadurch auch eine zuverlässigere Erkennung der Drehrichtung.

Als Beispiel kann genannt werden, dass bei einer Betriebsspannung von 13 V, einer Zeit T1 = T2 von 32 $\mu$s, und einer Störspannung N von 6 V Spitze-Spitze Störfrequenzen von 0 ... 1.000 Hz effizient kompensiert werden konnten. Dies ermöglicht eine sehr zuverlässige Erkennung der Drehrichtung auch in einer Umgebung, die stark gestört ist.

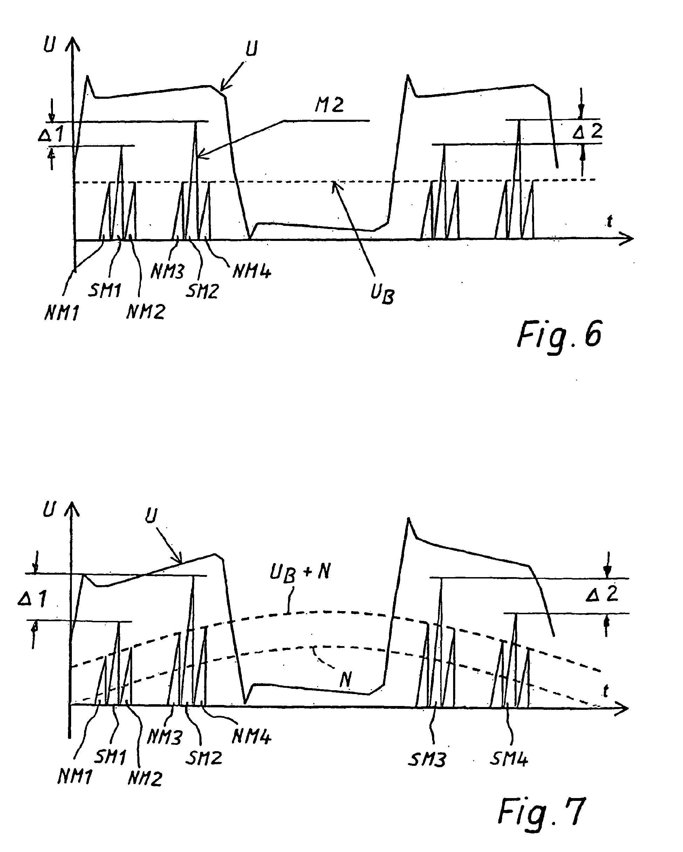

Fig. 6 zeigt den Fall, dass die Betriebsspannung UB keine Störspannung N enthält. In diesem Fall ergeben alle vier Störspannungsmessungen NM1, NM2, NM3 und NM4 denselben Wert, d.h. bei der Berechnung ergibt sich für die Störspannung der Wert 0, und die Unterschiede $\Delta 1$, $\Delta 2$ ergeben sich direkt aus den Signalmessungen SM1, SM2 etc.

Fig. 7 zeigt einen Fall mit einer Störspannung N, die sich der Betriebsspannung $U_B$ überlagert, so dass man anstelle der Betriebsspannung $U_B$ eine Spannung ($U_B$ + N) erhält.

In diesem Fall erhält die Spannung U im linken Teil eine ansteigende Form und im rechten Teil eine abfallende Form, d.h. ohne die Korrektur würden sich bei den Messungen zwei verschiedene Drehrichtungen ergeben, weil sich links für (SM2 - SM1) ein positives $\Delta 1$ ergibt, während sich rechts für (SM4 - SM3) ein negatives $\Delta 2$ ergibt, obwohl die Drehrichtung des Motors in beiden Fällen dieselbe ist. In diesem Fall erhält man durch die Korrektur in beiden Fällen dasselbe Resultat für die Drehrichtung.

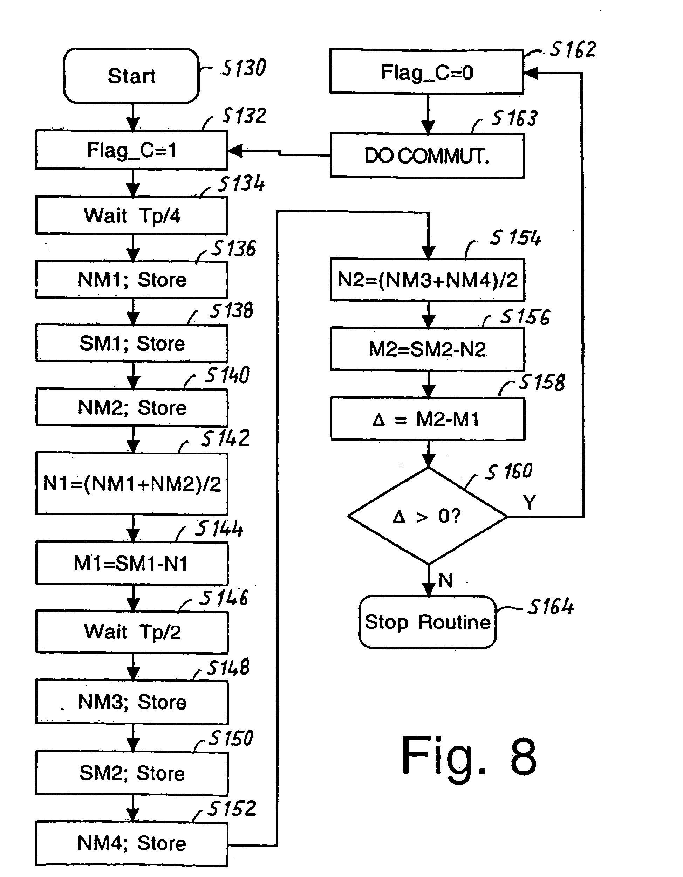

Fig. 8 zeigt die Routine zum Korrigieren der Messungen.

Bei S130 beginnt die Routine. Dort wird die Drehrichtung DIR auf den gewünschten Wert DIRsoll eingestellt, also z.B. auf Rechtslauf, und dieser Wert wird gespeichert. Bei S132 wird ein Flag_C auf 1 gesetzt, wodurch die Kommutierung gesperrt wird. Bei S134 erfolgt eine Verzögerung. Aus einer vorhergehenden Messung ist bekannt, wie lange die Zeit Tp zwischen zwei Kommutierungen dauert, und es wird bei S134 eine Zeit von etwa Tp/4 ab der letzten Kommutierung abgewartet.

Danach erfolgt bei S136 die in Fig. 7 dargestellte erste Störspannungsmessung NM1, und das Resultat wird gespeichert. Bei S138 erfolgt die erste Signalmessung SM1, vgl. Fig. 7, und das Ergebnis wird erneut gespeichert. Bei S140 erfolgt die zweite Störspannungsmessung NM2, und auch hier wird das Resultat gespeichert.

Bei S142 erfolgt die Berechnung des gemittelten Störspannungssignals 1, nämlich

$$N1 = (NM1 + NM2)/2 \qquad\qquad ...(5)$$

Bei S144 wird das korrigierte Messsignal M1 berechnet, also

$$M1 = SM1 - N1 \qquad\qquad ...(6)$$

Anschließend wird bei S146 abgewartet, bis ab der letzten Kommutierung z.B. etwa 50 % von Tp abgelaufen sind.

Danach wird bei S148 die Messung NM3 der Fig. 7 durchgeführt, dann bei S150 die Messung SM2, und dann bei S152 die Messung NM4.

Bei S154 wird völlig analog zu S142 der gemittelte Wert für die Störspannung N2 berechnet, nämlich

$$N2 = (NM3 + NM4)/2 \qquad\qquad ...(7),$$

und anschließend wird bei S156 der korrigierte Wert für die zweite Messung berechnet als

$$M2 = SM2 - N2 \qquad\qquad ...(8).$$

Man hat jetzt zwei korrigierte Messwerte M1 und M2, und aus diesen wird bei S158 der Wert

$$\Delta = M2 - M1 \qquad\qquad ...(9)$$

berechnet. Bei Rechtslauf ist der Wert für $\Delta$ positiv, bei Linkslauf negativ, und deshalb wird in S160 geprüft, ob die tatsächliche Drehrichtung DIRist der vorgegebenen Drehrichtung DIRsoll entspricht. Falls ja, wird in S162 das Flag_C aus S132 auf "0" umgeschaltet, also auf "Kommutierung erlaubt". Bei S163 wird die nächste Kommutierung abgewartet, und diese wird exekutiert.

Läuft dagegen der Motor 20 in der falschen Richtung, d.h. bei S160 lautet die Antwort Nein, so wird bei S164 auf eine Stopproutine umgeschaltet, der Motor 20 wird abgebremst, und ein neuer Anlauf in der gewünschten Richtung $DIR_{soll}$ wird versucht.

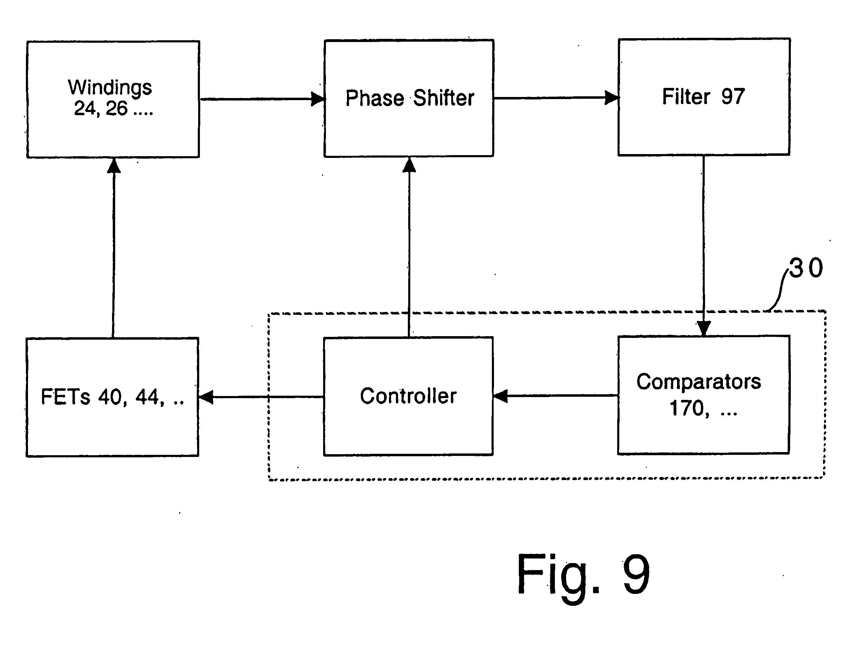

**Fig. 9** zeigt schematisch die Steuerung der FETs 40, 44 des Motors 20. Diese Steuerung hat u.a. die Funktion, bei einer Änderung der Drehzahl den Strom in den Phasen 24, 26 des Motors 20 entweder früher oder später einzuschalten. Dieser Vorgang kann abhängig von der Motordrehzahl erfolgen, und dieses Vorgehen bezeichnet man heute oft als Zündwinkelverschiebung.

Gemäß Fig. 9 werden die Spannungen an den Phasen 24, 26 einem Phasenschieber 90, 94, 100, 104 zugeführt. Dieser Phasenschieber ist ein Differenzierglied, und sein Ausgangssignal wird in einem Filter 96, 98, 106, 108 gefiltert, um hochfrequente Störungen auszufiltern. Dann werden diese Signale dem $\mu$C 30 zugeführt, der zugleich die Funktionen eines Komparators 170 und einer Steuerung 172 hat. Die Ausgangssignale des $\mu$C 30 steuern die FETs 40, 44, und über diese die Ströme in den Phasen 24, 26 des Motors 20.

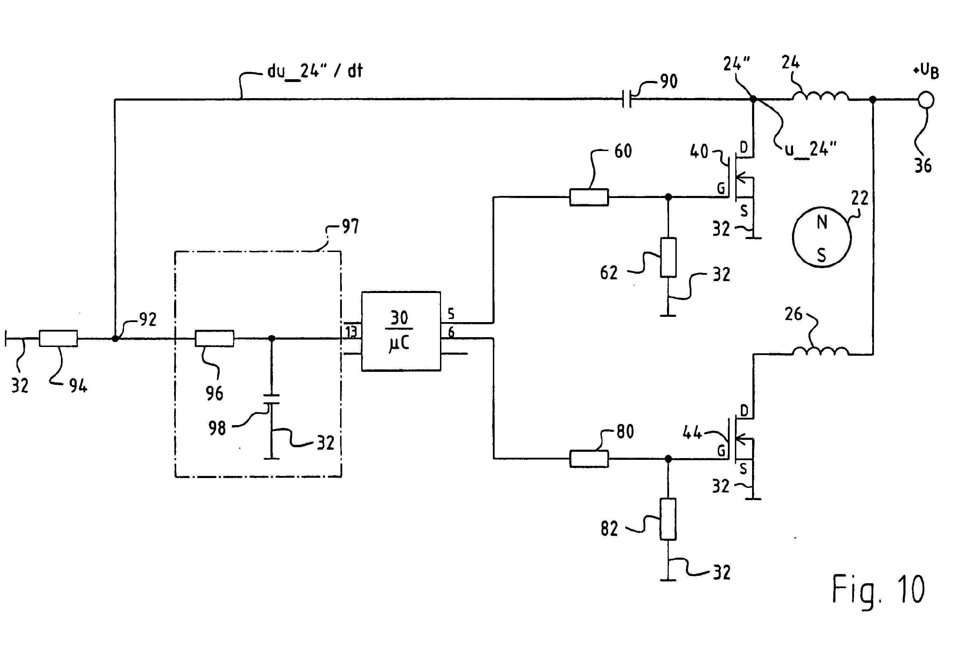

**Fig. 10** zeigt einen vereinfachten Auszug aus Fig. 1, in welchem der Transistor 44 für die Konstanthaltung des Motorstroms nicht dargestellt ist.

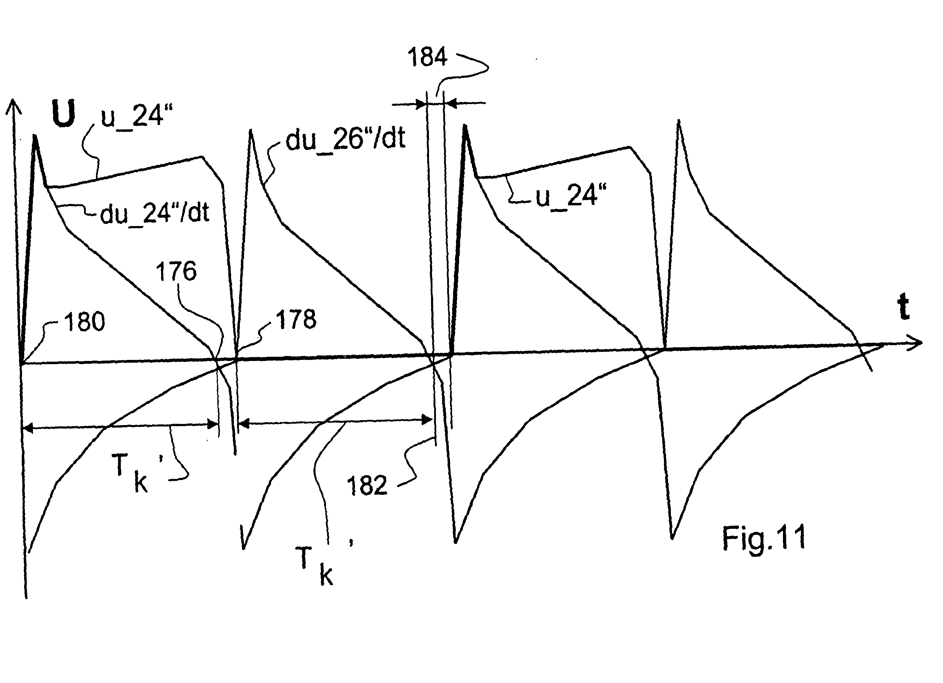

Das Potenzial u_24" am Wicklungsanschluss 24" wird dem Differenzierglied zugeführt, das aus dem Kondensator 90 und dem Widerstand 94 aufgebaut ist. Am Verbindungspunkt 92 dieser beiden Elemente erhält man eine differenzierte Spannung du_24"/dt, und diese Spannung wird durch geeignete Wahl der Komponenten so eingestellt, dass ihr Nulldurchgang 176 zeitlich vor dem Nulldurchgang der induzierten Spannung u_24" liegt, vgl. Fig. 11. Dieser Nulldurchgang 176 wird im $\mu$C 30 ausgewertet und bewirkt eine Kommutierung der Ströme in den Phasen 24, 26. Gleichzeitig wird auch die Zeit ab dem Beginn 180 der induzierten Spannung u_24" bis zum Nulldurchgang 176 gemessen und steuert als Zeit Tk' die nachfolgende Kommutierung.

In Fig. 10 wirken der Widerstand 96 (z.B. 100 k) und der Kondensator 98 (z.B. 1 nF) als Filter 97 am Eingang 12 des $\mu$C 30 und verhindern, dass hochfrequente Störungen eine Falschmessung bewirken.

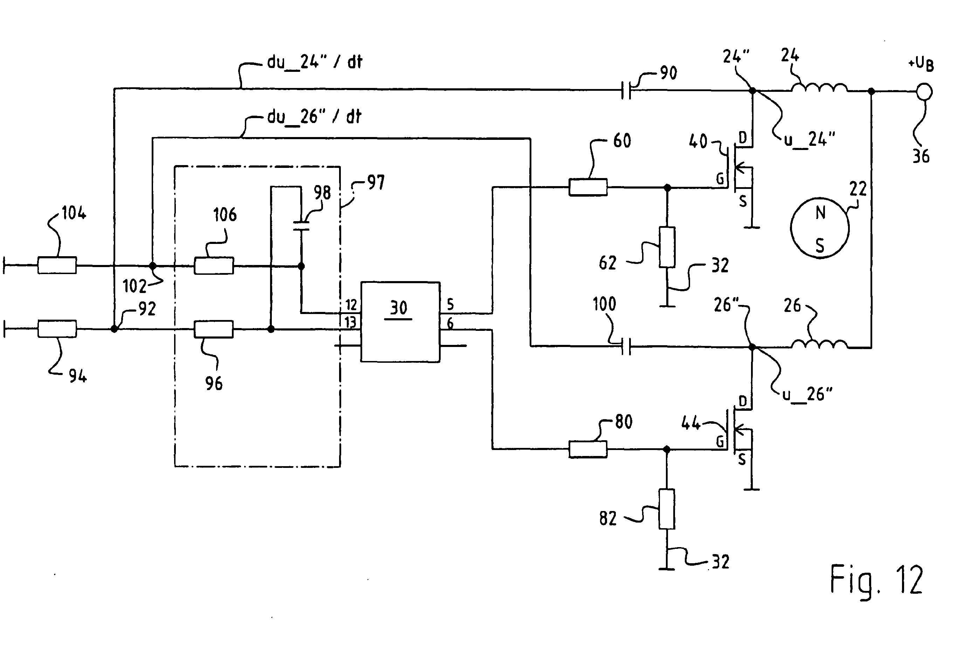

**Fig. 12** zeigt eine vereinfachte Schaltung analog Fig. 1. Hier wird zusätzlich das Potenzial u_26" am Anschluss 26" der Phase 26 einer Differenzierung unterworfen. Dadurch erhält man in Fig. 11 eine zweite Kurve du_26"/dt, also das Differenzial des Potenzials am Anschluss 26", und in diesem Fall wird diese Spannung dem Eingang 12 des $\mu$C zugeführt, während das Differenzial des Potenzials u_24" dem Eingang 13 zugeführt wird.

In diesem Fall kann man im $\mu$C 30 erfassen, wann die beiden Differenziale gleich groß sind. Dies ist z.B. an der Stelle 182 der Fig. 11 der Fall, und die Stelle 182 liegt folglich um eine Zeitspanne 184 vor dem Nulldurchgang des Potenzials u_24".

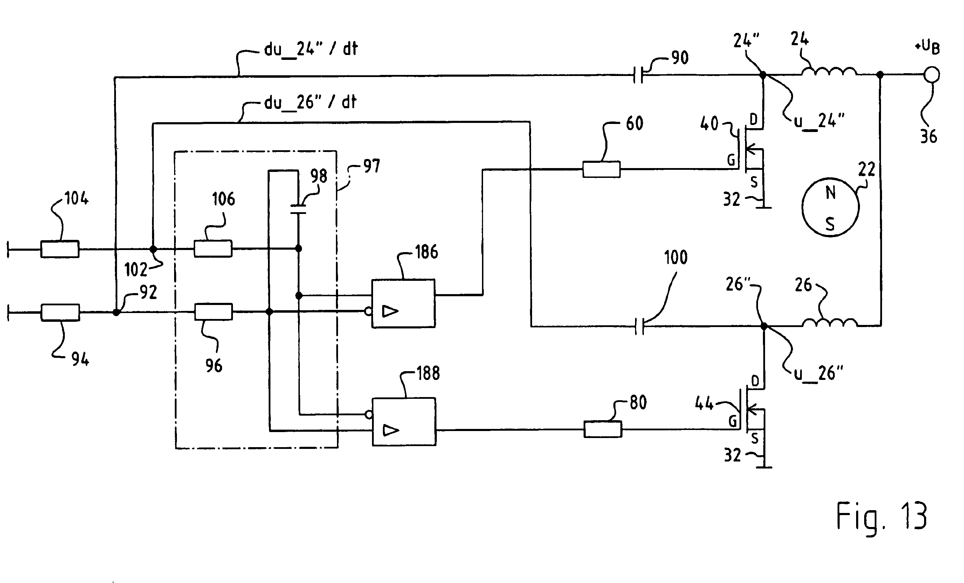

**Fig. 13** zeigt eine Schaltung analog Fig. 12, bei welcher aber für die Steuerung der Kommutierung zwei Komparatoren 186, 188 verwendet werden. Der Komparator 186 steuert den Transistor 40, der Komparator 188 den Transistor 44. Der Komparator 186 erhält an seinem positiven Eingang das Differenzial des Potenzials am Punkt 26", und an seinem negativen Eingang das Differenzial des Potenzials u_24" am Punkt 24". Beim Komparator 188 ist es umgekehrt. Die Wirkungsweise ist dieselbe, wie sie bei Fig. 12 beschrieben wurde, d.h. die Kommutierung erfolgt an der Stelle, die in Fig. 11 mit 182 bezeichnet ist und an der das differenzierte Signal du_24"/dt positiver wird als das differenzierte Potenzial du_26"/dt (ebenso umgekehrt). Man kann so auch bequem eine Frühzündung erreichen, und die Erzeugung der Kommutierungssignale ist sehr zuverlässig.

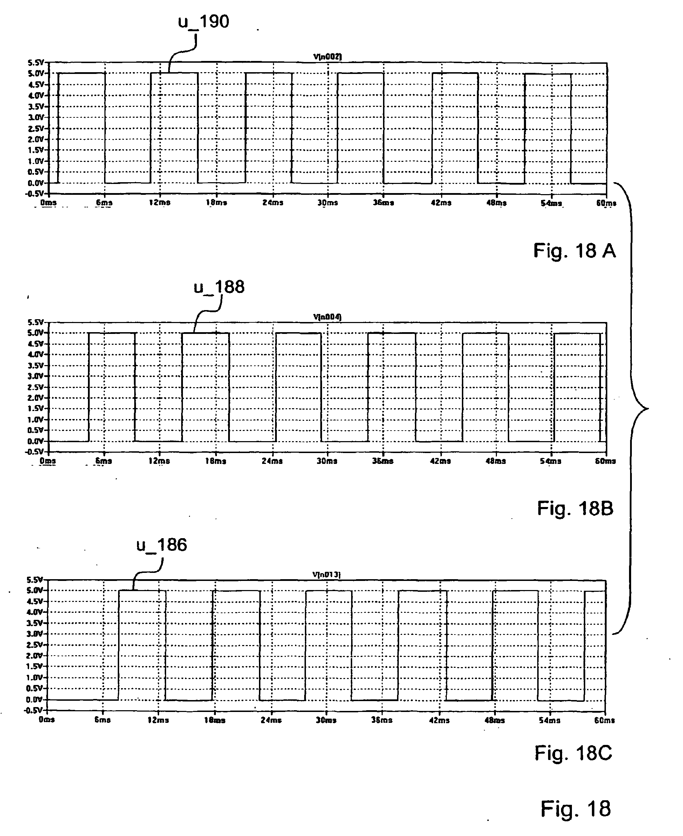

Der große Vorteil bei dieser Art der Kommutierung mit Hilfe der Differenziale der induzierten Spannungen u_24", u_26" ist, dass diese differenzierten Spannungen, also z.B. du_24"/dt, etwa den Verlauf einer Sägezahnspannung haben, so dass man sehr exakt definierte Schnittstellen - z.B. 182 in Fig. 11 - erhält. Die Ausgangssignale der Komparatoren 186, 188, wie sie z.B. in Fig. 18 für einen dreiphasigen Motor 20' dargestellt sind, sind Rechtecksignale u_186 bzw. u_188, die die gleiche Form haben wie die Hallsignale bei einem Motor, welcher Hall-ICs verwendet, und die deshalb in bekannten Schaltungen für Hallsensoren verwendet werden können. Falls - wie in Fig. 14 - zusätzlich ein $\mu$C 30 verwendet wird, kann dieser auch dazu verwendet werden, diese Rechtecksignale weiter zu verfeinern, also eine Art "Signalkosmetik" zu betreiben, wie das dem Fachmann bekannt ist.

Auch haben die differenzierten Spannungen, wie sie in Fig. 11 für die Schaltungen nach Fig. 12 und Fig. 13 dargestellt sind, relativ kleine Spannungsbereiche und können deshalb bequem in Komparatoren 186, 188 bekannter Bauart ausgewertet werden.

**Fig. 14** zeigt eine Schaltung für einen dreiphasigen Motor 20'. Diese Schaltung ist weitgehend gleich aufgebaut wie die Schaltung gemäß Fig. 13. Jedoch werden die Ausgangssignale der verwendeten Komparatoren 186, 188, 190 einem μC 30' (hier: PIC12F675) zugeführt, der diese Ausgangssignale in Signale zur Ansteuerung des Motors 20' umsetzt. Für gleiche oder gleich wirkende Teile wie in den vorhergehenden Figuren werden dieselben Bezugszeichen verwendet wie dort, und diese Teile werden gewöhnlich nicht nochmals beschrieben.

Der Motor 20' hat hier drei Stränge 24, 26, 28, bei denen der eine Anschluss 24', 26', 28' mit der positiven Leitung 36 (+$U_B$) verbunden ist. Der Rotor 22 ist zweipolig dargestellt, könnte aber auch andere Polzahlen haben, z.B. 4-, 6- oder 8-polig.

Der Strom in Strang 24 wird von einem n-Kanal-Mosfet 40 gesteuert, dessen Drain D über einen Knotenpunkt 24" an den ersten Strang 24 angeschlossen ist, und dessen Source S mit Masse 32 verbunden ist.

Analog ist der Drain D des FET 42 über den Knotenpunkt 26" an den zweiten Strang 26 angeschlossen.

Analog ist der Drain D eines dritten FET 43 über einen Knotenpunkt 28" an einen dritten Strang 28 angeschlossen.

Die Spannung u_24" am Knotenpunkt 24" wird über ein Differenzierglied (Kondensator 90 und Widerstand 94, verbunden über Knotenpunkt 92) differenziert zu einer Spannung du_24"/dt. Diese wird durch ein Siebglied (Widerstand 96, Kondensator 98) gefiltert und dem Minuseingang des Komparators 186 sowie dem Pluseingang des Komparators 190 zugeführt.

Analog wird die Spannung u_26" am Knotenpunkt 26" über ein Differenzierglied (Kondensator 100, Widerstand 104, verbunden über Knotenpunkt 102) zu einer Spannung du_26"/dt differenziert. Diese wird durch ein Siebglied (Widerstand 106, Kondensator 108) gefiltert und dem Pluseingang des Komparators 186 sowie dem Minuseingang des Komparators 188 zugeführt.

Analog wird die Spannung u_28" am Knotenpunkt 28" über ein Differenzierglied (Kondensator 110, Widerstand 124, verbunden über Knotenpunkt 122) zu einer Spannung du_28"/dt differenziert. Diese wird durch ein Siebglied (Widerstand 126, Kondensator 128) gefiltert und dem Pluseingang des Komparators 188 sowie dem Minuseingang des Komparators 190 zugeführt.

Das Ausgangssignal des Komparators 186 wird dem Eingang 2 des μC 30' zugeführt, das Ausgangssignal des Komparators 188 dem Eingang 3, und das Ausgangssignal des Komparators 190 dem Eingang 4.

Der Ausgang 7 des μC 30' steuert über den Widerstand 60 das Gate G des FET 40, das über den Widerstand 62 mit Masse 32 verbunden ist.

Der Ausgang 6 steuert über den Widerstand 84 das Gate des FET 42, das über den Widerstand 80 mit Masse 32 verbunden ist.

Der Ausgang 5 steuert über einen Widerstand 81 das Gate G des FET 43, das über einen Widerstand 83 mit Masse 32 verbunden ist.

Die Arbeitsweise entspricht derjenigen, welche bei Fig. 13 ausführlich beschrieben wurde, mit dem Unterschied, dass die Ausgangssignale der Komparatoren 186, 188, 190 die drei FETs 40, 42 und 43 nicht direkt steuern, sondern dass diese Signale im μC 30' ausgewertet und miteinander logisch verknüpft werden, um diese FETs nach den gewünschten Kriterien zu steuern.

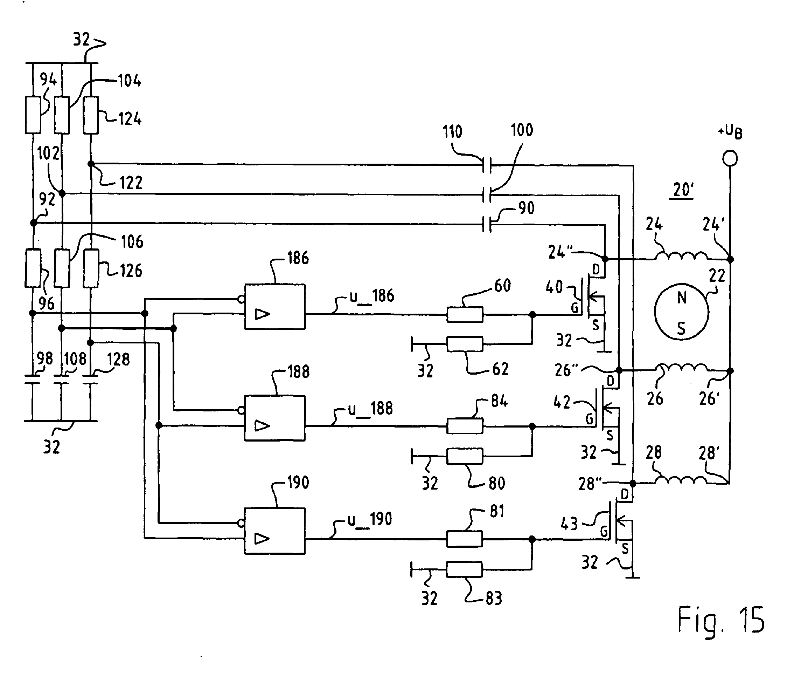

**Fig. 15** zeigt eine vereinfachte Variante zu Fig. 14. Gleiche oder gleich wirkende Teile wie in Fig. 14 sind mit denselben Bezugszeichen versehen und werden deshalb gewöhnlich nicht nochmals beschrieben.

Bei Fig. 15 ist der μC 30' der Fig. 14 entfallen. Der Widerstand 60 ist hier direkt an den Ausgang des Komparators 186 angeschlossen, der Widerstand 84 an den Ausgang des Komparators 188, und der Widerstand 81 an den Ausgang des Komparators 190. In diesem Fall ist die Drehrichtung festgelegt, während sie bei Fig. 14 durch entsprechende logische Operationen im μC 30' umgeschaltet werden kann.

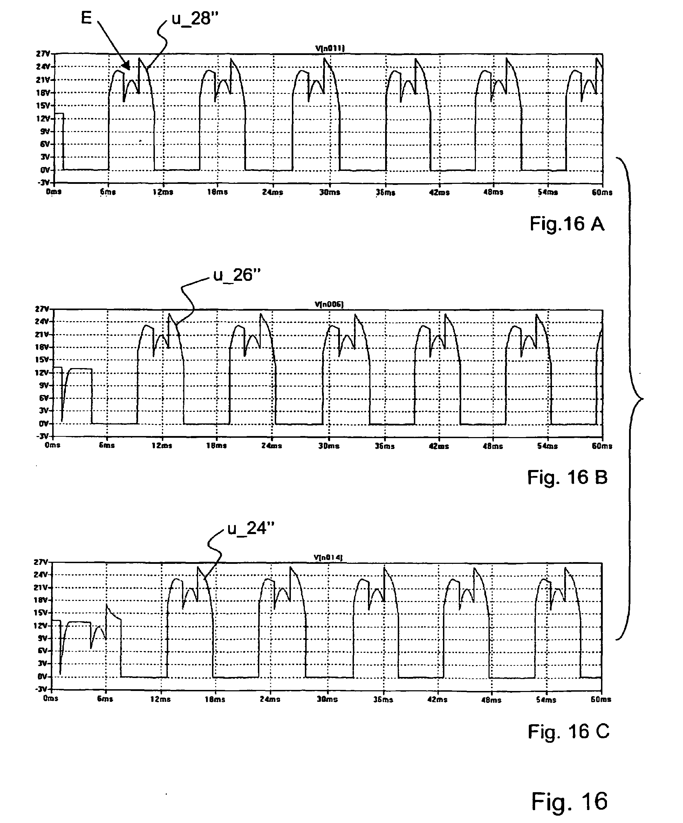

Fig. 16A zeigt die Spannung u_28" am Knotenpunkt 28".

Fig. 16B zeigt die Spannung u_26" am Knotenpunkt 26".

Fig. 16C zeigt die Spannung u_24" am Knotenpunkt 24".

Das sind die Spannungen an den Strängen 28, 26 und 24. Die Einsattelungen E sind eine Folge der transformatorischen Kopplung zwischen den Spulen, welche beim gemessenen Motor vorhanden war.

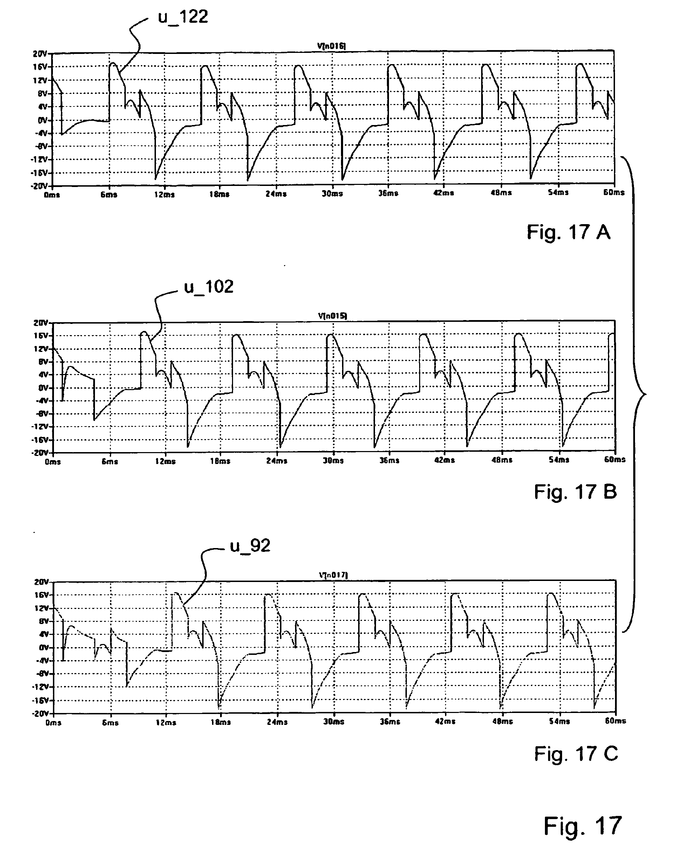

Fig. 17A zeigt die Spannung u_122 am Knotenpunkt 122.

Fig. 17B zeigt die Spannung u_102 am Knotenpunkt 102.

Fig. 17C zeigt die Spannung u_92 am Knotenpunkt 92.

Diese drei Spannungen stellen das Differenzial der Spannungen an den Spulen 28, 26 bzw. 24 dar.

Fig. 18A zeigt das Signal u_190 am Ausgang des Komparators 190.

Fig. 18B zeigt das Signal u_188 am Ausgang des Komparators 188.

Fig. 18C zeigt das Signal u_186 am Ausgang des Komparators 186.

Diese Signale steuern die FETs 43 bzw. 42 bzw. 40. Man erkennt, dass sich die Signale überlappen, da die Signale jeweils eine Impulslänge von 180° el. und eine Pausenlänge von ebenfalls 180° el. haben.

Mit der vorliegenden Erfindung ist es also möglich, auch einen dreiphasigen Motor sensorlos sicher zu steuern.

Der sensorlose Start des Motors ist bei den Ausführungsbeispielen nicht dargestellt. Hierfür eignen sich alle bekannten Verfahren, z.B. das Verfahren nach der EP 0 536 113 B1 (D175). Der Algorithmus, der in Fig. 21 dieser Patentschrift dargestellt ist, hat sich in der Praxis bewährt.

Naturgemäß sind im Rahmen der vorliegenden Erfindung vielfache Abwandlungen und Modifikationen im Rahmen der beigefügten Ansprüche möglich.

**Patentansprüche**

1. Verfahren zur Erfassung der Drehrichtung bei einem elektronisch kommutierten Motor, welcher einen Stator mit einer Mehrzahl von Phasen (24, 26) und einen permanentmagnetischen Rotor (22) aufweist, welcher Rotor (22) bei seiner Drehung in den Phasen (24, 26) des Stators Spannungen induziert, **gekennzeichnet durch** die folgenden Schritte:

   a) Der Verlauf des Spannungsabfalls an dem Transistor, **durch** welchen der Strom zu der im Augenblick bestromten Phase fließt, wird durch Messung von Messwerten an mindestens zwei vorgegebenen Zeitpunkten, welche Messwerte diesen Verlauf charakterisieren, erfasst;
   b) aus den erfassten Messwerten wird die Drehrichtung bestimmt.

2. Verfahren nach Anspruch 1, bei welchem zwischen zwei Nulldurchgängen des Spannungsabfalls an dem Transistor, durch welchen der Strom zu der im Augenblick bestromten Phase fließt, eine vorgegebene Zeitspanne (Tp) liegt, und der erste Messwert in einem Abstand von einem Nulldurchgang gemessen wird, der etwa 20 bis 30 % dieser vorgegebenen Zeitspanne (Tp) beträgt.

3. Verfahren nach Anspruch 1 oder 2, bei welchem zwischen zwei Nulldurchgängen des Spannungsabfalls an dem Transistor, durch welchen der Strom zu der im Augenblick bestromten Phase fließt, eine vorgegebene Zeitspanne (Tp) liegt, und der zweite Messwert in einem Abstand von einem Nulldurchgang gemessen wird, der etwa 40 bis 70 % dieser vorgegebenen Zeitspanne (Tp) beträgt.

4. Verfahren nach einem der vorhergehenden Ansprüche, bei welchem kurz vor und kurz nach der Erfassung eines Messwerts (SM1; SM2) jeweils mindestens ein die Betriebsspannung ($U_8$) charakterisierender Wert erfasst wird ($NM_1$, $NM_2$), und aus diesen erfassten Werten ein Wert berechnet, welcher die Störspannungen charakterisiert, die der Betriebsspannung überlagert sind, welcher berechnete Wert zur Korrektur des benachbarten Messwerts verwendet wird.

5. Verfahren zur sensorlosen Steuerung der Kommutierung bei einem elektronisch kommutierten Motor, welcher einen Stator mit mindestens einer Phase (24, 26) und einen permanentmagnetischen Rotor (22) aufweist, welch letzterer bei seiner Drehung in dieser mindestens einen. Phase (24, 26) eine Spannung (Fig. 12: u_24", u_26") induziert, **gekennzeichnet durch** die folgenden Schritte:

   a) Die induzierte Spannung in der mindestens einen Phase, oder der Spannungsabfall an einem Transistor, **durch** welchen der Strom zu der im Augenblick bestromten Phase fließt, wird differenziert;
   b) dieses differenzierte Signal (du_24"/dt; du_26"/dt) wird verwendet, um den Stromfluss in einer zugeordneten Phase (24, 26) des Stators zu steuern.

6. Verfahren nach Anspruch 5, bei welchem das durch die Differenzierung erzeugte Signal vor seiner Auswertung gefiltert wird.

7. Verfahren nach Anspruch 5 oder 6, bei welchem für eine Mehrzahl von Phasen die zeitlichen Ableitungen (Differenziale) der in diesen Phasen im Betrieb induzierten Spannungen erzeugt und miteinander verglichen werden. (Fig. 11, 13)

8. Verfahren nach Anspruch 7, bei welchem die zeitlichen Ableitungen Komparatoren zugeführt und in diesen verglichen werden, um bei einer ersten vorgegebenen Relation zwischen zwei solchen Ableitungen ein Signal zu erzeugen, und bei einer zweiten vorgegebenen Relation dieses Signal wieder abzuschalten. (Fig. 13, 14, 15)

9. Verfahren nach Anspruch 5 oder 6, bei welchem die zeitliche Ableitung (du_24"/dt) für die mindestens eine Phase gebildet und während eines ersten Abschnitts der Drehung des Rotors (22) die Zeit (Tk') von einem ersten Nulldurchgang (180) dieser Ableitung (du_24"/dt) bis zu einem zweiten Nulldurchgang (176) derselben erfasst wird,

und diese Zeit (Tk') für die Steuerung der Kommutierung während eines nachfolgenden zweiten Abschnittes der Drehung des Rotors (22) verwendet wird. (Fig. 10, 11)

**10.** Motor zur Durchführung eines Verfahrens nach einem der vorhergehenden Ansprüche.

**Claims**

**1.** Process for registering the direction of rotation in an electronically commutated motor that exhibits a stator with a plurality of phase windings (24, 26) and a permanent-magnet rotor (22), which rotor (22) induces, in the course of its rotation, voltages in the phase windings (24, 26) of the stator, **characterised by** the following steps:

a) the progression of the drop in voltage at the transistor through which the current is flowing to the phase winding that is supplied with current at the moment is registered by measurement of measured values at at least two predetermined times, which measured values characterise this progression;
b) the direction of rotation is determined from the measured values.

**2.** Process according to Claim 1, wherein a predetermined time-interval (Tp) lies between two zero crossings of the drop in voltage at the transistor through which the current is flowing to the phase winding that is supplied with current at the moment,
and the first measured value is measured after an interval following a zero crossing that amounts to about 20 % to 30 % of this predetermined time-interval (Tp).

**3.** Process according to Claim 1 or 2, wherein a predetermined time-interval (Tp) lies between two zero crossings of the drop in voltage at the transistor through which the current is flowing to the phase winding that is supplied with current at the moment, and the second measured value is measured after an interval following a zero crossing that amounts to about 40 % to 70 % of this predetermined time-interval (Tp).

**4.** Process according to one of the preceding claims,
wherein shortly before and shortly after the registration of a measured value (SM1; SM2) in each instance at least one value (NM1, NM2) characterising the operating voltage ($U_B$) is registered,
and from these registered values a value is computed which characterises the interference voltages that are superimposed on the operating voltage, which value is used for correcting the neighbouring measured value.

**5.** Process for sensor-less control of the commutation in an electronically commutated motor that exhibits a stator with at least one phase winding (24, 26) and a permanent-magnet rotor (22), which latter induces, in the course of its rotation, a voltage (Fig. 12: u 24", u_26") in this at least one phase winding (24, 26), **characterised by** the following steps:

a) the induced voltage in the at least one phase winding or the drop in voltage at a transistor through which the current is flowing to the phase winding that is supplied with current at the moment is differentiated;
b) this differentiated signal (du_24"/dt; du 26"/dt) is used in order to control the flow of current in an assigned phase winding (24, 26) of the stator.

**6.** Process according to Claim 5, wherein the signal generated by the differentiation is filtered prior to its evaluation.

**7.** Process according to Claim 5 or 6, wherein for a plurality of phase windings the time-derivatives (differentials) of the voltages induced in these phase windings in operation are generated and are compared with one another. (Figs. 11, 13)

**8.** Process according to Claim 7, wherein the time-derivatives are supplied to comparators and are compared in said comparators in order to generate a signal in the case of a first predetermined relation between two such derivatives and to switch this signal off again in the case of a second predetermined relation. (Figs. 13, 14, 15)

**9.** Process according to Claim 5 or 6, wherein the time-derivative (du 24"/dt) is created for the at least one phase winding and during a first portion of the rotation of the rotor (22) the time (Tk') from a first zero crossing (180) of this derivative (du_24"/dt) up until a second zero crossing (176) of the same is registered,
and this time (Tk') is used for the control of the commutation during a subsequent second portion of the rotation of the rotor (22). (Figs. 10, 11)

10. Motor for implementing a process according to one of the preceding claims.

**Revendications**

1. Procédé de détection du sens de rotation dans un moteur à commutation électronique, lequel présente un stator comportant une pluralité de phases (24, 26) et un rotor (22) à aimant permanent, lequel rotor (22) induit des tensions dans les phases (24, 26) du stator lors de sa rotation,
   **caractérisé par** les étapes suivantes :

   a) l'allure de la chute de tension au transistor à travers lequel le courant circule vers la phase momentanément alimentée est saisie en mesurant des valeurs de mesure à au moins deux instants prédéfinis, lesquelles valeurs de mesure caractérisent cette allure ;
   b) le sens de rotation est déterminé à partir des valeurs de mesure saisies.

2. Procédé selon la revendication 1, dans lequel un intervalle de temps prédéfini (Tp) est situé entre deux passages par zéro de la chute de tension au transistor à travers lequel le courant circule vers la phase momentanément alimentée,
   et la première valeur de mesure est mesurée à une distance d'un passage par zéro qui s'élève à environ 20 à 30 % de cet intervalle de temps prédéfini (Tp).

3. Procédé selon la revendication 1 ou 2, dans lequel un intervalle de temps prédéfini (Tp) est situé entre deux passages par zéro de la chute de tension au transistor à travers lequel le courant circule vers la phase momentanément alimentée, et la deuxième valeur de mesure est mesurée à une distance d'un passage par zéro qui s'élève à environ 40 à 70 % de cet intervalle de temps prédéfini (Tp).

4. Procédé selon un des revendications précédentes, dans lequel au moins une valeur (NM1, NM2) caractérisant la tension de service ($U_B$) est saisie respectivement un peu avant et un peu après la saisie d'une valeur de mesure (SM1 ; SM2),
   et une valeur qui caractérise les tensions perturbatrices qui sont superposées à la tension de service est calculée à partir de ces valeurs saisies, laquelle valeur calculée est utilisée pour corriger la valeur de mesure voisine.

5. Procédé de commande sans capteur de la commutation dans un moteur à commutation électronique, lequel présente un stator comportant au moins une phase (24, 26) et un rotor (22) à aimant permanent, lequel dernier induit une tension (fig. 12 : u_24", u_26") dans ladite au moins une phase (24, 26) lors de sa rotation, **caractérisé par** les étapes suivantes :

   a) la tension induite dans ladite au moins une phase ou la chute de tension à un transistor à travers lequel le courant circule vers la phase momentanément alimentée est différentiée ;
   b) ce signal différentié (du 24"/dt ; du_26"/dt) est utilisé pour commander le flux de courant dans une phase associée (24, 26) du stator.

6. Procédé selon la revendication 5, dans lequel le signal produit par la différentiation est filtré avant son exploitation.

7. Procédé selon la revendication 5 ou 6, dans lequel, pour une pluralité de phases, les dérivées par rapport au temps (différentielles) des tensions induites en fonctionnement dans ces phases sont produites et comparées entre elles. (Fig. 11, 13)

8. Procédé selon la revendication 7, dans lequel les dérivées par rapport au temps sont amenées à des comparateurs et comparées dans ceux-ci pour, dans le cas d'une première relation prédéfinie entre deux de ces dérivées, générer un signal et, dans le cas d'une deuxième relation prédéfinie, de nouveau désactiver ce signal. (Fig. 13, 14, 15)

9. Procédé selon la revendication 5 ou 6, dans lequel la dérivée par rapport au temps (du_24"/dt) pour ladite au moins une phase est formée et, pendant une première portion de la rotation du rotor (22), le temps (Tk') d'un premier passage par zéro (180) de cette dérivée (du_24"/dt) jusqu'à un deuxième passage par zéro (176) de celle-ci est saisi, et ce temps (Tk') est utilisé pour la commande de la commutation pendant une deuxième portion suivante de la rotation du rotor (22). (fig. 10, 11)

**10.** Moteur pour réaliser un procédé selon une des revendications précédentes.

Fig. 1

Fig. 2

Fig. 3

$$U = U_B + u_{ind}$$

$$DIR = \circlearrowleft$$

Fig 4

**Fig.5**

$$Signal = (Signal + N2) - (N1 + N3) / 2$$

Fig. 6

Fig. 7

Start — S130

Flag_C=1 — S132

Wait Tp/4 — S134

NM1; Store — S136

SM1; Store — S138

NM2; Store — S140

N1=(NM1+NM2)/2 — S142

M1=SM1-N1 — S144

Wait Tp/2 — S146

NM3; Store — S148

SM2; Store — S150

NM4; Store — S152

Flag_C=0 — S162

DO COMMUT. — S163

N2=(NM3+NM4)/2 — S154

M2=SM2-N2 — S156

Δ = M2-M1 — S158

Δ > 0? — S160    Y

N

Stop Routine — S164

# Fig. 8

| Windings 24, 26 .... | → | Phase Shifter | → | Filter 97 |

Fig. 9

Fig. 10

Fig.11

Fig. 12

Fig. 12

EP 1 596 495 B1

Fig. 13

Fig. 14

Fig. 15

EP 1 596 495 B1

EP 1 596 495 B1

Fig.16 A

Fig. 16 B

Fig. 16 C

Fig. 16

27

Fig. 17 A

Fig. 17 B

Fig. 17 C

Fig. 17

u_190

Fig. 18 A

u_188

Fig. 18B

u_186

Fig. 18C

Fig. 18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 61012790 A
- DE 19820929 A1
- DE 2346380 C2
- EP 0536113 B1